# EUROPEAN PATENT APPLICATION

(11) **EP 3 796 347 A1**
(43) Date of publication of application: **24.03.2021**
(21) Application number: 19382819.1
(22) Date of filing: 23.09.2019
(51) Int. Cl.: H01F 27/34, H01F 19/04, H01F 27/28

(54) **PLANAR TRANSFORMER WITH REDUCED PARASITIC LOSSES**

(71) Applicant: Wall Box Chargers S.L., 28108 Alcobendas (Madrid) (ES)
(72) Inventor: URRUTICOECHEA DE MIGUEL, Ignacio, 08740 Sant Andreu de la Barca (Barcelona) (ES); FERNÁNDEZ MOLA, José María, 08740 Sant Andreu de la Barca (Barcelona) (ES)
(74) Representative: Gallego Jiménez, José Fernando

(57) **Abstract**

The invention refers to a planar transformer (10) comprising a planar first primary coil (12); a planar first secondary coil (14) inductively coupled with the first primary coil (12); and a transformer magnetic core (18) for guiding a magnetic flux generated by the first primary coil (12) and/or the first secondary coil (14) around at least a first opening (16) of the transformer magnetic core (18). The first primary coil (12) and the first secondary coil (14) are coiled around the transformer magnetic core (18) through the first opening (16). The first primary coil (12) and the first secondary coil (14) are arranged on a first plane. The invention further refers to a battery charger comprising such a planar transformer.

## Description

### FIELD OF THE INVENTION

The present invention is in the field of planar transformers, in particular, it refers to a planar transformer with reduced parasitic capacitive coupling between a primary coil and a secondary coil of the planar transformer.

### BRACKGROUND OF THE INVENTION

Planar transformers are a sub-class of transformers characterised by the particularly planar configuration. Planar transformers are widely used as reduced-size solutions for electronic devices requiring transformer functionalities. The turns of the primary and secondary coils of the transformer are typically formed as thin copper sheets or etched on a PCB.

When used in the high frequency range for AC currents, for example at frequencies higher than 100 kHz, planar transformers known from the prior art suffer from a number of notorious disadvantages. Some of the more relevant ones are the so-called "skin effect" and the so-called "proximity effect".

The "skin effect" refers to the tendency of any AC current to flow through an electrical conductor with a current density profile that decreases from a periphery towards the center of the cross-section of the conductor, such that charge conduction mostly concentrates in the peripheral region of the conductor, i.e. at the "skin" of the conductor. The skin effect becomes more pronounced with increasing frequencies. As a consequence, the effective resistance increases at high frequencies, whereby losses are also increased.

The "proximity effect" refers to the tendency of any AC current to concentrate, i.e. to flow with a localised higher current density, in regions of a conductor that are further away from other nearby conductors, such as within a closely wound coil. The effect becomes more pronounced for increasing frequencies. As a result, the effective resistance of the conductor increases with frequency due to the proximity effect.

Further, the primary and secondary coils of a transformer may negatively affect each other due to mutual parasitic capacitive coupling.

Therefore, there is room for technical improvement in the field of planar transformers with respect to the reduction of losses.

### SUMMARY OF THE INVENTION

The present invention addresses the problem of providing a planar transformer with reduced losses, in particular reduced losses due to a parasitic capacitive coupling between the primary (inducting) coil and the secondary (induced) coil of a planar transformer, but also reduced losses due to the skin effect and the proximity effect. This problem is solved by a planar transformer according to claim 1. Preferred embodiments of the invention are described in the appended dependent claims.

A first aspect of the invention refers to a planar transformer. The planar transformer comprises a planar first primary coil and a planar first secondary coil inductively coupled with the first primary coil. "Planar" refers herein to an extension of the coils substantially in a plane, i.e. in two dimensions, such that a dimension or extension of the coils in a direction perpendicular to said plane, we shall be referred to herein as the "axial direction", is negligible or at least comparatively small in relation to the extension of the coils in the two directions defining the aforesaid plane. The planar first primary coil and the planar first secondary coil are inductively coupled to each other, such that when an electric current flows through the planar first primary coil, the planar first primary coil induces an induced electric current on the planar first secondary coil or vice versa. Thus, the planar first primary coil may operate as an inducing coil and the planar first secondary coil may operate as an induced coil or vice versa. The first primary coil and/or the first secondary coil may comprise a coated wiring.

The planar transformer further comprises a transformer magnetic core for guiding a magnetic flux generated by the first primary coil and/or the first secondary coil around at least a first opening. For example, if an electric current flows through the first primary coil, the transformer magnetic core may guide the magnetic flux generated by the first primary coil, which may induce an electric current on the first secondary coil. The transformer magnetic core may preferably comprise or be of a magnetic material having high magnetic permeability, in particular a ferromagnetic material.

The transformer magnetic core may have a toroidal shape or a closed square shape around the first opening. For example, the transformer magnetic core may have a circular cross-section and may have a toroidal shape and be configured for guiding a magnetic flux around a circular first opening. In other examples, the transformer magnetic core may have a substantially polygonal cross-section, in particular a rectangular or square cross-section or a rectangular or square cross-section with rounded edges and the transformer magnetic core may have the form of a closed square or rectangle closed around a rectangular or square first opening.

The transformer magnetic core needs not be monolithic, i.e. it needs not continuously extend around the entire perimeter of the first opening. Accordingly, the at least a first opening needs not have a continuous outer perimeter delimiting the opening. The transformer magnetic core may comprise two or more independent transformer magnetic sub-cores, such as, in the case of having one opening, a U-shaped or C-shaped sub-core superposed with an I-shaped sub-core. The first opening of the transformer magnetic core may then be formed between the magnetic core sub-elements. For example, the first opening may be formed between a U-shaped sub-core and an I-shaped sub-core stacked on the U-shaped sub-core such that the turn of the "U" faces away from the I-shaped sub-core. In the case of being configured for guiding the magnetic flux around, for example, two openings, the transformer magnetic core may for example comprise two superposed E-shaped sub-core or an E-shaped sub-core superposed to an I-shaped sub-core. Other possible combinations of core-shapes of the transformer magnetic core and/or the sub-elements thereof are accessible to the skilled person.

The first primary coil and the first secondary coil may be coiled around the transformer magnetic core through the first opening. In particular, the first primary coil and the first secondary coil may be coiled around at least a part of the transformer magnetic core through the first opening. The first primary coil and the first secondary coil may be coiled around at least a part of the transformer magnetic core through the first opening. For example, if the transformer magnetic core comprises an E-shaped sub-core stacked on an I-shaped sub-core, the first primary coil and the first secondary coil may be coiled around the central arm of the E-shaped sub-core, said central arm constituting in this case the aforesaid "at least one part" of the magnetic core. Since the first primary and secondary coils cross the opening, the first primary and secondary coils enclose said part of the transformer magnetic core. As a consequence, if, for example, an electric current flows through the first primary coil, the magnetic flux induced by the first primary coil is guided by the transformer magnetic core. The magnetic flux induced by the first primary coil induces an electric current in the first secondary coil.

For example, the first primary coil and the first secondary coil may be coiled around a toroidal transformer magnetic core through a circular first opening. In other examples, for instance if the transformer magnetic core comprises a U-shaped sub-core facing an I-shaped sub-core, the first primary coil and the first secondary coil may be coiled around a lateral leg of the U-shaped sub-core through the opening formed between the U-shaped sub-core and the I-shaped sub-core in the U-I-core. Other possible configurations for the coiling of the first primary coil and the first secondary coil around the transformer magnetic core are accessible to the skilled person.

In a first aspect of the present invention, the first primary coil and the first secondary coil may be arranged on a first plane. The first primary coil and the first secondary coil may then be arranged on the same plane. In other words, the first primary coil and the first secondary coil may be coplanar. Thus, the aforesaid at least a part of the transformer magnetic core, around which the first primary coil and the first secondary coil are coiled, may correspond to a cross-section of the transformer magnetic core intersecting the first plane on which the first primary coil and the first secondary coil are arranged. The inventors of the present invention found out that when the first primary coil and the first secondary coil are coplanar, the parasitic capacity of inductance between the first primary coil and the first secondary coil can be advantageously reduced.

In preferred embodiments of the invention, the first primary coil and the first secondary coil may be concentric. The turns of the first primary coil and the turns of the first secondary coil may hence coil around a common centre, wherein said common centre may in particular be comprised within the transformer magnetic core. In preferred embodiments of the invention, the first primary coil may be surrounded by the first secondary coil or the first secondary coil may be surrounded by the first primary coil advantageously, when the first primary coil and the first secondary coil are concentrically arranged, the parasitic capacity of inductance between the first primary coil and the first secondary coil can be further reduced, thereby improving the performance of the planar transformer.

In preferred embodiments of the invention, the first primary coil and the first secondary coil may be spaced apart in a radial direction. "Radial direction" as used herein, may refer to a direction pointing from a given point of the first primary coil or the first secondary coil to the centre of the coil, around which the coil is coiled. Notably, although this direction may coincide with the "radial coordinate" that could be used in a system of cylindrical coordinates for configurations having rotational symmetry around said centre of the coils, for example when the turns of the first primary coil and/or of the first secondary coil are circular or substantially circular, such as spiral, the term "radial direction" as used herein is not restricted to configurations having such rotational symmetry or any other symmetry. In particular, the "centre" of the coil needs not correspond to a geometric centre and may, for example, correspond to the position of a center of masses of the respective coil.

Preferably, a radial distance between the first primary coil and the first secondary coil may be from 0.1 mm to 15 mm, preferably from 1 mm to 10 mm, more preferably from 2 mm to 4 mm. A separation or distance between the first primary coil and the first secondary coil in the radial direction, in particular in the aforementioned radial distance ranges, has been found by the inventors of the present invention to provide an optimal trade-off between the targeted reduction in the parasitic capacitive coupling between the first primary coil and the first secondary coil and the desired and intended inductive coupling between the first primary coil and the first secondary coil.

In preferred embodiments of the invention, the planar transformer may further comprise one or more intercoil radial dielectric spacers extending in the radial direction between the first primary coil and the first secondary coil. The first radial dielectric spacer may be planar and may be arranged on the first plane, in which the first primary coil and the first secondary coil are arranged. The one or more radial dielectric spacers may hence extend in the radial direction between the first primary coil and the first secondary coil. The one or more intercoil radial dielectric spacers may preferably be concentric with the first primary coil and the first secondary coil. In preferred embodiments of the invention, the first primary coil and the first secondary coil may be mutually separated in the radial direction by an intercoil radial dielectric spacer having an extension or thickness in the radial direction from 0.1 mm to 15 mm, preferably from 1 mm to 10 mm, more preferably from 2 mm to 4 mm. The aforesaid thickness may correspond to the distance between the first primary coil and the first secondary coil in the radial direction. This configuration may contribute to achieving the aforesaid optimal trade-off between the reduction in the parasitic capacitive coupling between the first primary coil and the first secondary coil and the intended inductive coupling therebetween with a reduced extension of the planar transformer in the radial direction.

In preferred embodiments of the invention, the first primary coil and/or the first secondary coil may be separated from the transformer magnetic core in an axial direction by one or more axial dielectric spacers. "Axial direction" may refer as used herein to a direction perpendicular to the primary coil and/or to the first secondary coil and parallel to the central axis thereof, around which the respective coil is coiled, i.e. to a direction normal to the first plane. The one or more axial dielectric spacers may extend in the axial direction between the first primary coil and the transformer magnetic core and/or between the first secondary coil and the transformer magnetic core. The one or more axial dielectric spacers may extend in the axial direction between the first primary coil and/or the first secondary coil and the transformer magnetic core.

For example, the first primary coil and the first secondary coil may be coplanar, with the first secondary coil surrounding the first primary coil, and may be coiled around the central arm of an E-shaped sub-core that is superposed with an I-shaped sub-core forming an E-I-core. A first axial dielectric spacer may then separate the first primary coil and the first secondary coil from the I-shaped sub-core and be arranged between the I-shaped sub-core on one side and the first primary coil and the first secondary coil on the other side. Further, a second axial dielectric spacer may separate the first primary coil and the first secondary coil from the main section of the E-shaped sub-core that is normal to the central arm around which the first primary coil and the first secondary coil are coiled.

The first primary coil and/or the first secondary coil may be separated from the transformer magnetic core in the axial direction by an axial dielectric spacer having a thickness in the axial direction from 0.1 mm to 3 mm, preferably from 0.2 mm to 1.5 mm, more preferably from 0.3 mm to 1.0 mm or 0.3 to 0.6 mm. The one or more axial dielectric spacers, in particular in the aforesaid thickness ranges, may contribute to a reduced dispersion of magnetic flux in the first primary coil and/or the first secondary coil and may further provide a reduced parasitic capacitance between the first primary coil and the transformer magnetic core and/or the first secondary coil and the transformer magnetic core in the axial direction due to the proximity of the transformer magnetic core.

According to preferred embodiments of the invention, the first primary coil and/or the first secondary coil may be separated from the transformer magnetic core in a radial direction by one or more radial dielectric spacers. The radial dielectric spacers may extend in the radial direction between the first primary coil and the transformer magnetic core and/or between the first secondary coil and the transformer magnetic core. For example, in embodiments in which the first primary coil and the first secondary coil are coplanar and are coiled within a transformer magnetic core having a E-I-core configuration, coiled around the central arm of the E-shaped sub-core, a first radial dielectric spacer may be wound around the central arm of the E-shaped sub-core between the first primary coil and the transformer magnetic core, and a second radial dielectric spacer may be wound around the first secondary coil, between the first secondary coil and an inner surface of the lateral arms of the E-shaped sub-core.

The first primary coil and/or the first secondary coil may be separated from the transformer magnetic core in the radial direction by a radial dielectric spacer having a thickness in the radial direction from 0.5 mm to 2.5 mm, preferably from 1.0 mm to 2.0 mm, more preferably from 1.25 mm to 1.75 mm. The one or more radial dielectric spacers, in particular in the aforesaid thickness ranges, may contribute to a reduced dispersion of magnetic flux in the first primary coil and/or the first secondary coil and may further provide a reduced parasitic capacitance between the first primary coil and the transformer magnetic core and/or the first secondary coil and the transformer magnetic core in the axial direction due to the proximity of the transformer magnetic core.

According to preferred embodiments of the invention, any of the aforesaid dielectric spacers, i.e. any of the one or more intercoil radial dielectric spacers, the one or more axial dielectric spacers and the one or more radial dielectric spacers, may comprise or be of a material having a dielectric constant smaller than 10, preferably smaller than 5, more preferably smaller than 2.5. For example, the aforesaid dielectric spacers may comprise or be of a plastic material, in particular polypropylene, kapton, millar, paper, glass fiber, glass fiber with resin or an epoxy resin. Dielectric materials having a dielectric constant within the aforementioned ranges have been found by the inventors to provide the necessary isolation between the elements of the planar transformer that may allow minimising the parasitic capacitive coupling between the first primary coil and the first secondary coil and between the first primary coil and/or the first secondary coil and the transformer magnetic core.

In preferred embodiments of the invention, the first primary coil and/or the first secondary coil may comprise from 1 to 30 coil turns, preferably from 1 to 10, more preferably from 1 to 5.

In preferred embodiments of the invention, the first primary coil and/or the first secondary coil may have an inductance in the range from 10 µH to 10 mH, preferably from 50 µH to 1 mH, more preferably from 200 µH to 500 µH.

According to preferred embodiments of the invention, the transformer magnetic core may further be configured for guiding the magnetic flux generated by the first primary coil and/or the first secondary coil around at least a second opening of the transformer magnetic core. For example, the transformer magnetic core may be an 8-shaped core or may comprise an E-shaped sub-core superposed with an I-shaped sub-core or may comprise two superposed E-shaped sub-cores. The first primary coil and the first secondary coil may then be coiled around the transformer magnetic core through the first opening and through the second opening. The transformer magnetic core may for instance comprise two superposed E-shaped sub-cores facing each other such that the central arm and the lateral arms of one of the sub-cores abuts, respectively, on the central arm and the lateral arms of the other sub-core and is respectively aligned therewith. A first opening of the magnetic core is then formed between the central arms and the lateral arm on one side of the central arm, while a second opening of the magnetic core is formed between the central arm and the lateral arm on the other side of the central arm. The first primary coil and the first secondary coil may be coiled around the central arms of the sub-cores, which are mutually aligned, through the first opening and through the second opening.

In preferred embodiments of the invention, the planar transformer may further comprise a planar second primary coil and a planar second secondary coil inductively coupled with the second primary coil. The second primary coil may be connected in series with the first primary coil. The second secondary coil may be connected in series with the first secondary coil. The second primary coil and the second secondary coil may be coiled around the transformer magnetic core through the first opening. The second primary coil and the second secondary coil may respectively reproduce the properties described above for the first primary coil and the first secondary coil.

In some embodiments, the first primary coil may be arranged over the second primary coil and/or the first secondary coil may be arranged over the second secondary coil. The second primary coil and the second secondary coil may be arranged on a second plane parallel to the first plane and spaced apart from the first plane in the axial direction. The second primary coil and the second secondary coil may thus extend in parallel to the first primary coil and the first secondary coil and be spaced therefrom in the axial direction.

In preferred embodiments of the invention, at least one of the second primary coil and the second secondary coil may be separated from the first primary coil and/or the first secondary coil in the axial direction by one or more intercoil axial dielectric spacers. The one or more intercoil axial dielectric spacers may extend in the axial direction between the first plane and the second plane. At least one of the second primary coil and the second secondary coil may be separated from at least one of the first primary coil and the first secondary coil in the axial direction by an intercoil axial dielectric spacer having a thickness in the radial direction from 0.5 mm to 10 mm, preferably from 2 mm to 8 mm, more preferably from 2.5 mm to 4 mm

In preferred embodiments of the invention, the planar transformer device may further comprise a first inductor element. The first inductor element may comprise a planar first induction coil electrically connected in series with the first primary coil and a first induction magnetic core for guiding a magnetic flux generated by the first induction coil around at least a first opening of the first induction magnetic core. The first induction coil may be coiled around the first induction magnetic core through the at least a first opening thereof. The structural configurations of the first induction magnetic core may be any of the configurations previously described for the transformer magnetic core, which are not described again in detail for brevity. The first induction coil may operate as an inductive load of the first primary coil. The first inductor element may be arranged over the transformer magnetic core, wherein a dielectric interposer may optionally be arranged between the first inductor element and the transformer magnetic core.

In preferred embodiments of the invention, the planar transformer device may further comprise a second inductor element comprising a planar second induction coil electrically connected in series with the first secondary coil and a second induction magnetic core for guiding a magnetic flux generated by the second induction coil around at least a first opening of the second induction magnetic core. The second induction coil may be coiled around the second induction magnetic core through the at least a first opening thereof. The second induction coil may operate as an inductive load of the first secondary coil. The second inductor element may be arranged on a side of the transformer magnetic core opposite to the first inductor element, e.g. below the transformer magnetic core, the first inductor element being over the transformer magnetic core. In other examples, the second inductor element may be arranged over the first inductor element, such that the second inductor element and the first inductor element are stacked and arranged over the transformer magnetic core. A dielectric interposer may optionally be arranged between the second inductor element and the transformer magnetic core or between the first inductor element and the second inductor element.

In preferred embodiments of the invention, the first induction coil and/or the second induction may have an inductance in the range from 7 µH to 12 µH.

In preferred embodiments of the invention, the first inductor element and/or the second inductor element may be mutually separated by one or more intercore axial dielectric spacers. Additionally or alternatively, the first inductor element and/or the second inductor element may be separated from the transformer magnetic core by one or more intercore axial dielectric spacers. The first inductor element and/or the second inductor element may be mutually separated by an intercore axial dielectric spacer having a thickness in the axial direction from 0.1 mm to 5 mm, preferably from 0.2 mm to 1 mm, more preferably from 0.3 mm to 0.6 mm. Additionally or alternatively, the first inductor element and/or the second inductor element may be separated from the transformer magnetic core by an intercore axial dielectric spacer having a thickness in the axial direction from 0.1 mm to 5 mm, preferably from 0.2 mm to 1 mm, more preferably from 0.3 mm to 0.6 mm.

Preferably, the first induction magnetic core and/or the second induction magnetic core may comprise two superposed, i.e. stacked, induction sub-cores mutually separated in the axial direction by an inter-sub-core axial dielectric spacer. For example, if the first induction magnetic core and/or the second induction magnetic core is an E-I-shaped magnetic core, the inter-sub-core axial dielectric spacer may be arranged between the E-shaped sub-core and the I-shaped sub-core. The inter-sub-core axial dielectric spacer or spacers may have a thickness in the axial direction between 0.1 and 5 mm, preferably from 1.0 mm to 3 mm, more preferably from 1.5 mm to 2.5 mm.

According to preferred embodiments of the invention, at least one of the first primary coil, the first secondary coil, the second primary coil and the second secondary coil comprises litz wire or is of litz wire. In other words, at least one of the first primary coil, the first secondary coil, the second primary coil and the second secondary coil may be formed by turns of litz wire. The litz wire may comprise a plurality of parallel sub-wires and/or a plurality of interleaved sub-wires. The use of litz wire may advantageously reduce the loss of performance of the planar transformer due to the skin effect in the coils.

A second aspect of the present invention refers to a planar transformer according to any of the previously described embodiments, but in which the first primary coil and the first secondary coil, instead of being arranged on the same plane (i.e. on the first plane), may be arranged on different planes. For example, the first primary coil may be arranged on a first plane and the first secondary coil may be arranged below the first primary coil, i.e. on a second plane parallel to the first plane part and spaced apart from the first plane in the axial direction. The configurations of the planar transformer according to this aspect of the invention concerning the presence, arrangement and thicknesses of spacers (e.g. axial dielectric spacers separating the first primary coil and/or the first secondary coil from the transformer magnetic core in the axial direction, and radial dielectric spacers separating the first primary coil and/or the first secondary coil from the transformer magnetic core in the radial direction, may correspond to those described above for the spacers of the planar transformer according to the first aspect of the invention and are not described again in detail for brevity. A summarising list of the examples including this second aspect of the invention is provided below.

The planar transformers according to embodiments of the present invention may be particularly suitable for operating in the high frequency range, such as frequencies from 100 kHz to 2 MHz, in particular from 250 kHz to 750 kHz or from 250 kHz to 500 kHz.

A further aspect of the invention refers to a battery charger for charging an electric battery comprising a planar transformer according to any of the embodiments of the planar transformer according to the first aspect or according to the second aspect described herein.

### BRIEF DESCRIPTION OF THE DRAWINGS

Fig. 1 schematically illustrates a planar transformer according to embodiments of the invention. Figs. 1a and 1b respectively illustrate a cross-sectional front view and a cross-sectional top view thereof. Fig. 1c corresponds to the view of Fig. 1a for the transformer magnetic core of the planar transformer.
Fig. 2 schematically illustrates a planar transformer according to embodiments of the invention. Figs. 2a and 2b respectively illustrate a cross-sectional front view and a cross-sectional top view thereof. Fig. 2ec corresponds to the view of Fig. 2a for the transformer magnetic core of the planar transformer.
Fig. 3 schematically illustrates a transformer according to embodiments of the invention.
Fig. 4 is a schematic circuit diagram corresponding to the planar transformer of Fig. 3.
Fig. 5 schematically illustrates a planar transformer according to embodiments of the invention.
Fig. 6 schematically illustrates a transformer according to embodiments of the invention.
Fig. 7 schematically illustrates a planar transformer according to embodiments of the invention.
Fig. 8 schematically illustrates a top view of an inductor element according to embodiments of the invention.

### DESCRIPTION OF DETAILED EMBODIMENTS OF THE INVENTION

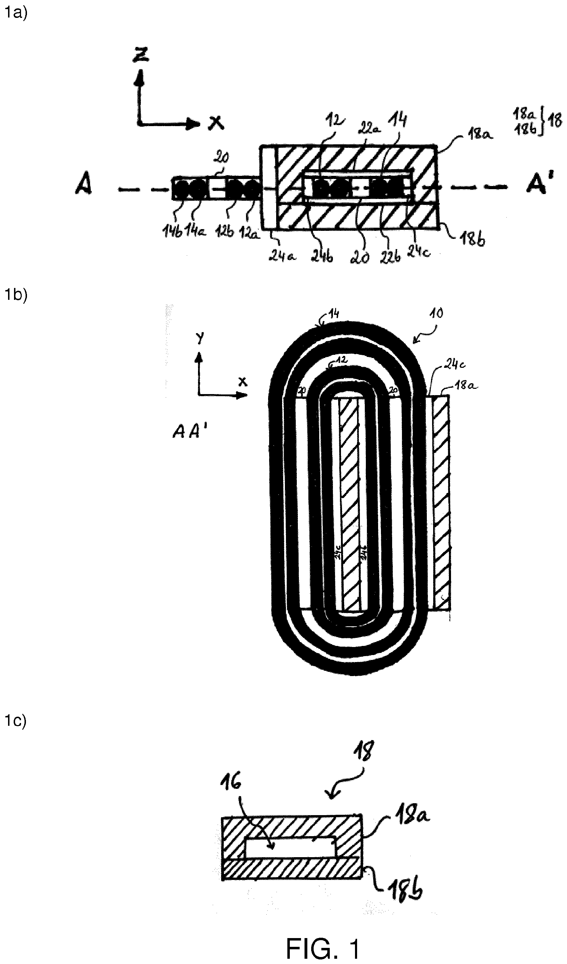

Fig. 1 illustrates a planar transformer 10 according to embodiments of the first aspect of the present invention. Fig. 1a illustrates a cross-sectional front view of the planar transformer 10, while Fig. 1b illustrates a cross-sectional top view of the power transformer 10 at the cut plane A-A' indicated in Fig. 1a win a dashed line. The planar transformer 10 comprises a planar first primary coil 12 and a planar first secondary coil 14. The turns of the first primary coil 12 and the turns of the first secondary coil 14 extend substantially in one plane, the "first plane".

The planar first secondary coil 14 is inductively coupled with the first primary coil 12. The power transformer 10 comprises a transformer magnetic core 18, an isolated cross-sectional view of which is provided in Fig. 1c, corresponding to the top view of Fig. 1a, with all other elements removed for illustrative purposes. In the embodiment shown, the transformer magnetic core 18 comprises a C-shaped sub-core 18a superposed on and I-shaped sub-core 18b. The lateral arms of the C-shaped sub-core 18a abut on the I-shaped sub-core 18b, thereby forming a first opening 16 between the sub-cores 18a and 18b of the transformer magnetic core 18. In the embodiment shown, the first opening 16 has a rectangular cross-section, as seen in Fig. 1c. In other embodiments, the first opening 16 can have a cross-section with other shapes.

The first primary coil 12 and the first secondary coil 14 are coiled around the transformer magnetic core 18 through the first opening 16. In particular, the first primary coil 12 and the first secondary coil 14 are coiled around the left lateral arm (as seen in Fig. 1) of the C-shaped sub-core 18a of the transformer magnetic core 18 traversing the opening 16. When an electric current flows through the first primary coil 12, the magnetic flux generated by the first primary coil 12 is guided by the transformer magnetic core 18 through the interior of the transformer magnetic core 18 and around the first opening 16. The magnetic flux generated by the first primary coil 12 induces an induced electric current in the first secondary coil 14. The transformer magnetic core 18 is a ferromagnetic core made of an iron compost.

As seen in Fig. 1, the first primary coil 12 and the first secondary coil 14 are arranged on a first plane, i.e. are coplanar. The first primary coil 12 and the first secondary coil 14, as illustrated in Fig. 1b, are concentric, i.e. are concentrically coiled around one of the lateral arms of the C-shaped sub-core 18a. The first primary coil is surrounded by the first secondary coil 14. Although only two turns 12a and 12b of the the first primary coil 12 and two turns of 14a and 14b of the first secondary coil 14 are exemplarily illustrated in Fig. 1, the first primary coil 12 and the first secondary coil 14 can comprise a larger number of turns, which are not represented for illustrative simplicity. For example, the first primary coil 12 and the first secondary coil 14 may each comprise four turns coiled around the transformer magnetic core 18.

As illustrated in Fig. 1b, the first primary coil 12 and the first secondary coil 14 are spaced apart in a radial direction by a radial distance, which in the embodiment shown is of 2.5 mm. The first primary coil 12 is separated from the first secondary coil 14 in the radial direction by an intercoil radial dielectric spacer 20 that extends in the radial direction between the first primary coil 12 and the first secondary coil 14 having a thickness corresponding to the aforesaid radial distance. In the embodiment shown in Fig. 1, the first primary coil 12 and the first secondary coil 14, i.e. the turns thereof, have a circular cross-section.

In the embodiment shown in Fig. 1, the first primary coil 12 and the first secondary coil 14 are separated from the transformer magnetic core 18 in an axial direction - represented in Fig. 1a as direction "z" - by a first axial dielectric spacer 22a and a second axial dielectric spacer 22b. The first axial dielectric spacer 22a is arranged in the axial direction between the C-shaped sub-core 18a and the "first plane" on which the first primary coil 12 and the first secondary coil 14 are arranged, thus extending between the C-shaped sub-core 18a on one side and the first primary coil 12 and the first secondary coil 14 on the other side. The second axial dielectric spacer 22b is arranged in the axial direction between the I-shaped sub-core 18b and the "first plane", extending in the axial direction z between the I-shaped sub-core 18b on one side and the first primary coil 12 and the first secondary coil 14 on the other side. In the embodiment shown, the axial dielectric spacers 22a and 22b have a thickness in the axial direction of 0,4 mm.

The first primary coil 12 is separated from the transformer magnetic core 18 in the radial direction, which in the cross-section represented in Fig. 1a corresponds to direction "x", by a first radial dielectric spacer 24a and a second radial dielectric spacer 24b, which extend in the radial direction, on respective sides of the left hand side lateral arm of the C-shaped sub-core 18a, between the transformer core 18 and the first primary coil 12. The first secondary coil 14 is separated from the transformer magnetic core 18 in the radial direction by a third radial dielectric spacer 24c and extends in the radial direction between the right hand side lateral arm of the C-shaped sub-core 18a and the first secondary coil 14. In the embodiment shown, the first to third radial dielectric spacers 24a, 24b and 24e have a thickness in the radial direction of 1,5 mm.

The dielectric spacers 20, 22a, 22b, 24a, 24b, 24c, 24d and 24e are made of a material having a dielectric constant smaller than 2.5, for example polyurethane.

In the embodiment shown in Fig. 1, the first primary coil 12 and the first secondary coil 14 have approximately an inductance of 220 µM.

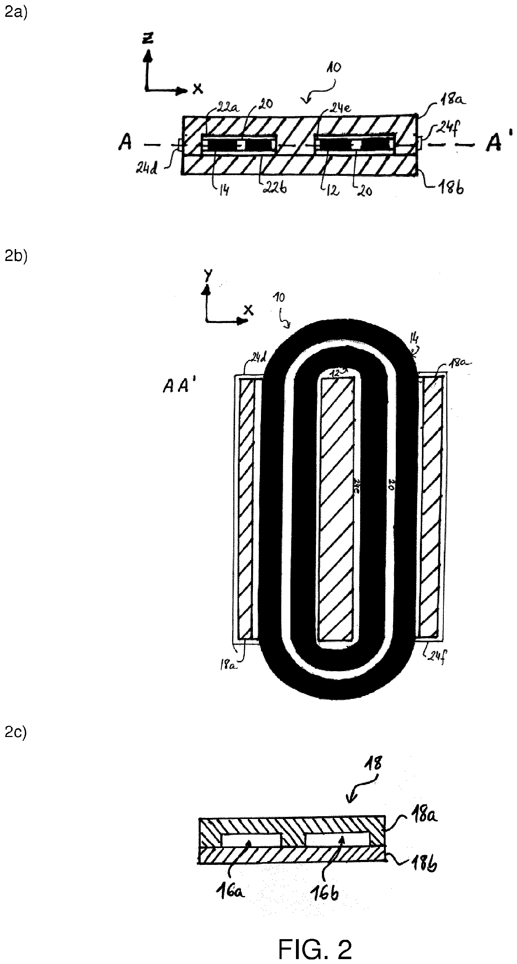

Fig. 2 illustrates a power transformer 10 according to a related embodiment of the invention. Fig. 2a illustrate a cross-sectional front view corresponding to the view of Fig. 1a. Fig. 2b illustrates a cross-sectional top view corresponding to the view of Fig. 1b. Fig. 2c illustrates the view of Fig. 2a with all elements but the transformer magnetic core 18 removed for illustrative purposes, corresponding to the view of Fig. 1c. The elements of the power transformer 10 that have already been described for the transformer 10 of Fig. 1 are indicated with the same reference numerals and are not described again in detail for brevity.

In the embodiment shown in Fig. 2, the first primary coil 12 and the first secondary coil 14 have a rectangular cross-section, as seen in Fig. 2a, instead of a circular cross-section. In other embodiments, the first primary coil 12 and the first secondary coil 14 can have different cross sections, and a cross-section of the first primary coil 12 can be different in shape from a cross-section of the first secondary coil 14. Although only one turn of each of the first primary coil 12 and the first secondary coil 14 is illustrated in Fig. 2, this is only for illustrative purposes. The first primary coil 12 and the first secondary coil 14 may comprise a larger number of turns, for example 4, 5 or 10 turns.

As seen in Fig. 2c, the transformer magnetic core 18 of these embodiment comprises an E-shaped sub-core 18a stacked on and I-shaped sub-core 18b, thereby forming a first opening 16a and a second opening 16b between the E-shaped sub-core 18a and the I-shaped sub-core 18b. The first primary coil 12 and the first secondary coil 14 are coiled around the transformer magnetic core 18, in particular around the central arm of the E-shaped sub-core 18a, through the first opening 16a and the second opening 16b. The transformer magnetic core 18 is configured for guiding a magnetic flux generated by the first primary coil 12, which induces an induced electric current in the first secondary coil 14, around the first opening 16a and the second opening 16b.

As seen in Fig. 2, the first primary coil 12 is separated from the central arm of the E-shaped sub-core 18a of the transformer magnetic core 18 in the radial direction (i.e. in the x-direction in Fig. 2a) by a radial dielectric spacer 24e that is arranged on the first plane, on which the first primary coil 12 and the first secondary coil 14 extend, surrounding the central arm of the E-shaped sub-core 18a extending between said central arm and the first primary coil 12 in the radial direction.

As in the embodiment illustrated in Fig. 1, the first primary coil 12 and the first secondary coil 14 are mutually separated in the radial direction by an inter-core radial dielectric spacer 20. Further, the first secondary coil 14 is separated from the left-hand side lateral arm of the E-shaped sub-core 18a by a first radial dielectric spacer 24d that is arranged around the left-hand side lateral arm of the E-shaped sub-core 18a extending in the radial direction between said lateral arm and the first secondary coil 14. Likewise, the first secondary coil 14 is separated from the right hand side lateral arm of the E-shaped sub-core 18a in the radial direction by a second radial dielectric spacer 24f that is arranged around the right-hand side lateral arm of the E-shaped sub-core 18a on the first plane and hence extends in the radial direction between the right-hand side lateral arm of the E-shaped sub-core 18a and the first secondary coil 14.

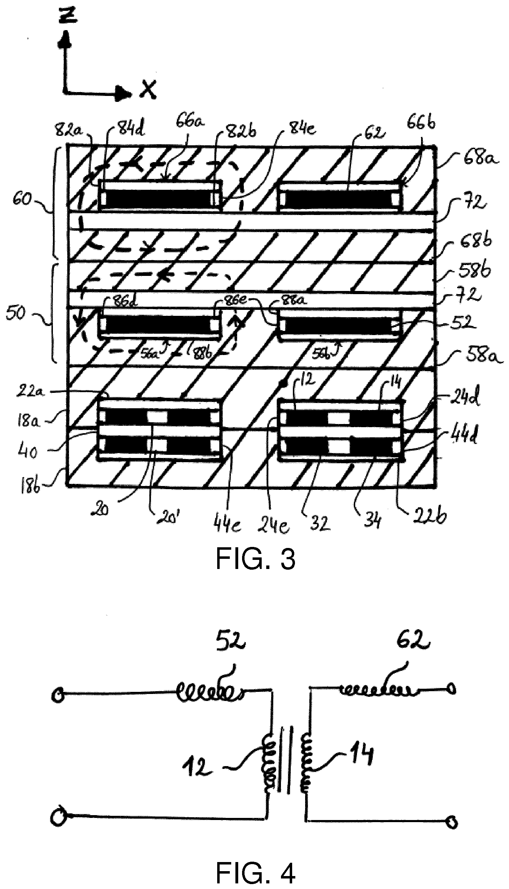

Fig. 3 illustrates a flat transformer 10 according to a related embodiment of the invention. Those elements of the planar transformer 10 that have been previously discussed for the planar transformers 10 of the embodiments illustrated in Fig. 1 and Fig. 2 are indicated with the same reference numerals and are not discussed again in detail for brevity.

In addition to the first primary coil 12 and the first secondary coil 14, the planar transformer 10 illustrated in Fig. 3 comprises a planar second primary coil 32 and a planar second secondary coil 34 that is inductively coupled with the second primary coil 32. The second primary coil 32 and the second secondary coil 34 are mutually coplanar and are arranged on a second plane that is parallel to the first plane, on which the first primary coil 12 and the first secondary coil 14 are arranged, and spaced from this first plane in the axial direction, which in Fig. 3 corresponds to the direction z. The second primary coil 32 is arranged below the first primary coil 12 parallel thereto. The second secondary coil 34 is arranged below the first secondary coil 14 parallel thereto.

The second primary coil 32 and the second secondary coil 34 are coiled around the transformer magnetic core 18 of the first opening 16a and through the second opening 16b of the transformer magnetic core 18, like the first primary coil 12 and the first secondary coil 14.

In the embodiment shown in Fig. 3, the transformer magnetic core 18 comprises a first E-shaped sub-core 18a stacked on a second E-shaped sub-core 18b, such that the arms of the first E-shaped sub-core 18a abut on the arms of the second E-shaped sub-core 18b, thereby forming the first opening 16a and the second opening 16be between the two E-shaped sub-cores 18a and 18b.

The first primary coil 12 is separated from the transformer magnetic core 18 in the radial direction, in particular from the central arm of the first E-shaped sub-core 18a by a radial dielectric spacer 24e that is arranged around the central arm of the E-shaped sub-core 18a extending between the transformer magnetic core 18 and the first primary coil 12 in the radial direction. The first primary coil 12 and the first secondary coil 14 are separated from each other in the radial direction by the intercoil radial dielectric spacer 20. The first secondary coil 14 is separated from the lateral arms of the first E-shaped sub-core 18a in the radial direction by a radial dielectric spacer 24d that is arranged surrounding the central arm of the first E-shaped sub-core 18a adjacent to the internal walls of the lateral arms of the first E-shaped sub-core 18a, as seen in Fig. 3. In the axial direction, the first primary coil 12 and the first secondary coil 14 are separated from the first E-shaped sub-core 18a by an axial dielectric spacer 22a having a configuration analogous to the configuration of the axial dielectric spacer 22a.

Likewise, the second primary coil 32 is separated from the central arm of the second E-shaped sub-core 18b in the radial direction by a radial dielectric spacer 44e having a configuration analogous to the configuration of the radial dielectric spacer 24b. The second primary coil 32 and the second secondary coil 34 are mutually separated in the radial direction by a second intercoil radial dielectric spacer 20', which has a configuration analogous to the configuration of the intercoil radial dielectric spacer 20. The second secondary coil 34 is separated from the second E-shaped sub-core 18b in the radial direction by a radial dielectric spacer 44d that has a configuration analogous to the configuration of the radial dielectric spacer 24d. Further, the second primary coil 32 and the second secondary coil 34 are separated from the second E-shaped sub-core 18b in the axial direction by an axial dielectric spacer 22b.

In addition, the second primary coil 32 and the second secondary coil 34 are separated from the first primary coil 12 and the first secondary coil 14 in the axial direction by an intercoil axial dielectric spacer 40 that extends in the radial direction between the first plane, on which the first primary coil 12 and the first secondary coil 14 are arranged, and the second plane, on which the second primary coil 32 and the second secondary coil 34 are arranged. The intercoil axial dielectric spacer 40 is arranged around the central arms of the first E-shaped sub-core 18a and the second E-shaped sub-core 18b, as seen in Fig. 3.

The planar transformer 10 of Fig. 3 further comprises a first inductor element 50 that is arranged over the transformer magnetic core 18. In the embodiment shown, the first inductor element 50 is arranged directly on a back side of the first E-shaped sub-core 18a facing away from the first opening 16a and the second opening 16b. The first inductor element 50 comprises a planar first induction coil 52 that is electrically connected in series with the first primary coil 12, as illustrated in the circuit diagram of Fig. 4, which corresponds to the basic connection structure of the planar transformer device 10 represented in Fig. 3.

The first inductor element 50 further comprises a first induction magnetic core 58, which in the embodiment shown comprises a first E-shaped sub-core 58a and an I-shaped sub-core 58b mutually superposed forming a first opening 56a and a second opening 56b therebetween. In the embodiment shown, the E-shaped induction sub-core 58a is separated from the I-shaped induction sub-core 58b in the axial direction by an inter-sub-core axial dielectric spacer 72.

The first induction coil 52 is coiled around the first induction magnetic core 58, in particular around the central arm of the E-shaped induction sub-core 58a, such that the first induction magnetic core 58 is configured for guiding a magnetic flux generated by the first induction coil 52 around the first opening 56a and the second opening 56b of the first induction magnetic core 58.

The power transformer device 10 represented in Fig. 3 further comprises a second inductor element 60 comprising a second induction coil 62 that is electrically connected in series with the first secondary coil 14, as illustrated in Fig. 4, and a second induction magnetic core 68 for guiding a magnetic flux generated by the second induction coil 62 around corresponding openings 66a and 66b of the second induction magnetic core 68. In the embodiment shown, the second inductor element 16 is arranged over the first inductor element 50. The second inductor element 60 has a structure and configuration analogous to the structure and configuration of the first inductor element 50 but for the different orientation. The I-shaped inductor sub-core 58b of the first induction magnetic core 58 is arranged adjacent to the Ishaped induction sub-core 68b of the second induction magnetic core 68. Consequently, lines of magnetic flux that are respectively created by the first induction coil 52 and guided by the first induction magnetic core 58 and created by the second induction coil 62 and guided by the second induction magnetic core 68, which are represented in Fig. 3 as closed dashed lines, can cancel each other.

In the embodiment illustrated in Fig. 3, the first induction coil 52 is separated from the central arm of the E-shaped induction sub-core 58a in the radial direction by a radial dielectric spacer 86e and the second induction coil 62 is separated from the central arm of the E-shaped induction sub-core 68a in the radial direction by a radial dielectric spacer 84e. The radial dielectric spacers 86e, 84e are respectively arranged around the central arm of the E-shaped induction sub-core 58a and around the central arm of the E-shaped induction sub-core 68a and have a configuration and arrangement analogous to the configuration and arrangement of the radial dielectric spacers 24e and 44e.

Likewise, the first induction coil 52 is separated in the radial direction from the lateral arms of the I-shaped induction sub-core 58b by a radial dielectric spacer 86d and is separated in the axial direction from the E-shaped induction sub-core 58a by an axial dielectric spacer 88b and from the inter-sub-core axial dielectric spacer 72 by an axial dielectric spacer 88a. The second induction coil 62 is separated in the radial direction from the lateral arms of the E-shaped induction sub-core 68a by a radial dielectric spacer 84d, and is separated in the axial direction from the E-shaped induction sub-core 68a by an axial dielectric spacer 82a and is separated in the axial direction from the inter-sub-core axial dielectric spacer 72 by an axial dielectric spacer 82b.

The radial dielectric spacers of the first inductor element 50 and of the second inductor element have a configuration and arrangement analogous to the configuration and arrangement of the radial dielectric spacers 24e and 24d respectively. The radial dielectric spacers of the second inductor element 60 and of the second inductor element have a configuration and arrangement analogous to the configuration and arrangement of the axial dielectric spacers 22a and 22b respectively.

In the embodiment shown in Fig. 3, the axial dielectric spacer 66a has a thickness in the axial direction (i.e. in the z direction as seen in Fig. 3) of 0.3 mm, the radial dielectric spacers 84d and 84e have a thickness in the radial direction of 1.5 mm, the axial dielectric spacer 82b has a thickness in the axial direction of 0.6 mm. The inter-sub-core axial dielectric spacers 72 have a thickness in the axial direction of 0.5 millimetres. The axial dielectric spacer 88a has a thickness in the axial direction (i.e. in the z direction as seen in Fig. 3) of 0.6 mm, the radial dielectric spacers 86d and 86e have a thickness in the radial direction of 1.5 mm, the axial dielectric spacer 88b has a thickness in the axial direction of 0.3 mm.

The axial dielectric spacers 22a and 22b have a thickness in the axial direction of 0.4 mm. The radial dielectric spacers 24e, 24d, 44e and 44d have a thickness in the radial direction of 1.5 mm. The intercoil radial dielectric spacers 20 and 20' have a thickness in the radial direction of 2.5 mm. The intercoil axial dielectric spacer 40 has a thickness in the axial direction of 3 mm.

In the embodiment shown in Fig. 3, the first primary coil 12 and the first secondary coil 14 have approximately an inductance of 220 µM, and each of the firs inductor coil 52 and the second inductor coil 62 have approximately an inductance of 10 µM.

Although it is not illustrated in detail in Fig. 3, the first primary coil 12, the first secondary coil 14, the second primary coil 32 and the second secondary coil 34 are coils of litz wire comprising a plurality of interleaved coated sub-wires.

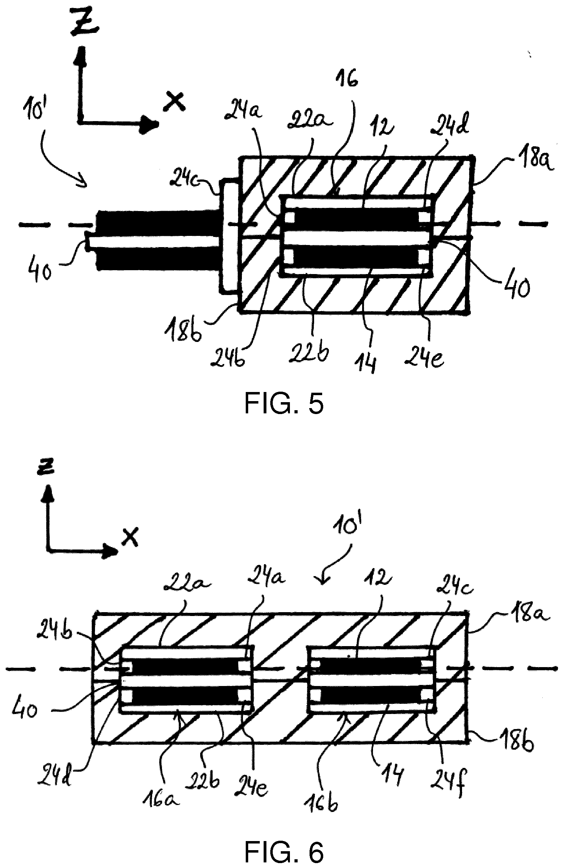

Fig. 5 illustrates a planar transformer 10' according to embodiments of the second aspect of the invention described above. The planar transformer 10' illustrated in Fig. 5 has the same components as the planar transformer 10 illustrated in Fig. 1. However, the first primary coil 12 and the first secondary coil 14 are not arranged on the same plane. Instead, the first primary coil 12 is arranged over the first secondary coil 14, such that the first primary coil 12 and the first secondary coil 14 are mutually spaced in the axial direction (which in the cross-section illustrated in Fig. 5 corresponds to the z direction), namely in a direction perpendicular to the plane of the first primary coil 12 and to the plane of the first secondary coil 14.

Instead of being separated in the radial direction by the intercoil radial dielectric spacer 20 shown in Fig. 1, in the embodiment illustrated in Fig. 5, the first primary coil 12 and the first secondary coil 14 are mutually separated in the axial direction by an intercoil axial dielectric spacer 40, which in the embodiment shown is made of polyurethane and has a thickness in the axial direction of 3 mm.

In the embodiment shown in Fig. 5, the transformer magnetic core 18 comprises a first C-shaped sub-core 18a and a second C-shaped sub-core 18b, which are superposed facing each other such as to form a first opening 16 of the transformer magnetic for 18 therebetween. The first primary coil 12, the first secondary coil 14 and the intercoil axial dielectric spacer 40 are coiled or wound around the transformer magnetic core through the first opening 16.

Fig. 6 illustrates a related embodiment of the invention in which the transformer magnetic core 18 comprises a first E-shaped sub-core 18a and a second E-shaped sub-core 18b. A first opening 16a and a second opening 16b are hence formed between the first E-shaped sub-core 18a and the second E-shaped sub-core 18b. The first primary coil 12 and the first secondary coil 14 are coiled around the central arms of the E-shaped sub-cores 18a and 18b through the first opening 16a and through the second opening 16b of the transformer magnetic core 18. The transformer magnetic core 18 is configured for guiding a magnetic flux generated by the first primary coil 12 around the first opening 16a and around the second opening 16b of the transformer magnetic core 18.

The first primary coil 12 and the second primary coil 14 have specifications corresponding to the specifications of the first primary coil 12 and the first secondary coil 14 previously described for the embodiments illustrated in figures. 1 to 5. In the embodiment shown, the first primary coil and the first secondary coil 14 are coils of litz wire comprising a plurality of interleaved coated sub-wires. Further, the specifications of the dielectric spacers 22a, 22b, 24a, 24b, 24c, 24d, and 24e respectively correspond to the specifications of the corresponding dielectric spacers of the embodiments of the invention described above with reference to figs. 1 to 5.

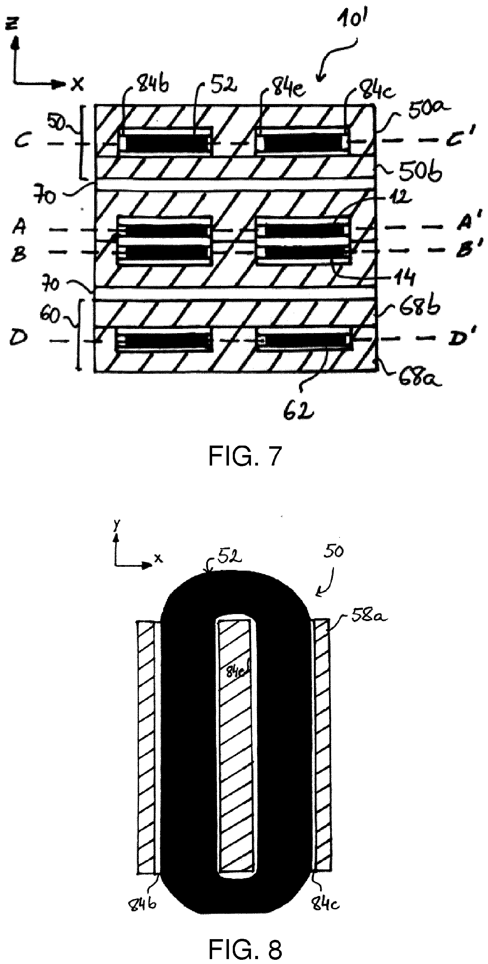

Fig. 7 illustrates a related embodiment of the second aspect of the invention in which the planar transformer 10' further comprises a first inductor element 50 corresponding to the first inductor element described for the embodiment illustrated in Fig. 3, and a second inductor element 60 corresponding to the inductor element 60 described for the embodiment illustrated in Fig. 3. In the embodiment illustrated in Fig. 7, there is no inter-sub-core axial dielectric spacer between the sub-cores 58a and 58b of the first induction magnetic core 58 or between the sub-cores 68a and 68b of the second induction magnetic core 68. Instead of being stacked on the first inductor element 50 and over the transformer magnetic core 18, the second inductor element 60 is arranged in this embodiment below the transformer magnetic core 18, while the first inductor element 50 is arranged over the transformer magnetic core 18. Thus, the first inductor element 50 and the second inductor element 60 are arranged on opposite sides of the transformer magnetic core 18 in the axial direction z.

In the embodiment shown in Fig. 7, the first inductor element is separated from the transformer magnetic core 18 in the axial direction by a first intercore axial dielectric spacer 70 and the second inductor element 60 is separated from the transformer magnetic core 18 by a second intercore axial dielectric spacer 70. The intercore axial dielectric spacers 70 each have a thickness in the axial direction of 0.5 mm and are of polypropylene.

Fig. 8 illustrates a cross-sectional top view of the first inductor element 50 at the cut plane CC' indicated in Fig. 7 by a dashed line. As seen in Fig. 8, the first induction coil 52 is coiled around the first induction magnetic core 58, in particular around the central arm of the E-shaped sub-core 58a of the first induction magnetic core 58. The second inductor element 60 has an analogous structure in a corresponding plane.

The present disclosure further refers to the following examples:

### EXAMPLES

1. A planar transformer comprising:
   a planar first primary coil;
   a planar first secondary coil inductively coupled with the first primary coil; and
   a transformer magnetic core for guiding a magnetic flux generated by the first primary coil and/or the first secondary coil around at least a first opening of the transformer magnetic core;
   wherein the first primary coil and the first secondary coil are coiled around the transformer magnetic core through the first opening.
2. The planar transformer of example 1, wherein the first primary coil is arranged over the first secondary coil, such that the first primary coil and the first secondary coil are mutually spaced in an direction perpendicular to the plane of the first primary coil and to the plane of the first secondary coil.
3. The planar transformer of any of the preceding examples, wherein the first primary coil and the first secondary coil are spaced apart in an axial direction.
4. The planar transformer of example 3, wherein an axial distance between the first primary coil and the first secondary coil is from 0.1 mm to 15 mm, preferably from 1 mm to 10 mm, more preferably from 2 mm to 4 mm.
5. The planar transformer device of any of the preceding examples, further comprising one or more intercoil axial dielectric spacers extending in an axial direction between the first primary coil and the first secondary coil, wherein the first primary coil and the first secondary coil are mutually separated in the axial direction by the one or more intercoil axial dielectric spacers.
6. The planar transformer of any of the preceding examples, wherein the first primary coil and/or the first secondary coil is separated from the transformer magnetic core in an axial direction by one or more axial dielectric spacers.
7. The planar transformer of any of the preceding example, wherein the first primary coil and/or the first secondary coil is separated from the transformer magnetic core in the axial direction by an axial dielectric spacer having a thickness in the axial direction from 0.1 mm to 3 mm, preferably from 0.2 mm to 1.5 mm, more preferably from 0.3 mm to 1.0 mm or 0.3 to 0.6 mm.
8. The planar transformer of any of the preceding examples, wherein the first primary coil and/or the first secondary coil is separated from the transformer magnetic core in a radial direction by one or more radial dielectric spacers.
9. The planar transformer of any of the preceding examples, wherein the first primary coil and/or the first secondary coil is separated from the transformer magnetic core in the radial direction by a radial dielectric spacer having a thickness in the radial direction from 0.5 mm to 2.5 mm, preferably from 1.0 mm to 2.0 mm, more preferably from 1.25 mm to 1.75 mm.
10. The planar transformer device of any of examples 6 to 10, wherein any of said dielectric spacers comprises or is of a material having a dielectric constant smaller than 10, preferably smaller than 5, more preferably smaller than 2,5.
11. The planar transformer of any of the preceding examples, wherein the first primary coil and/or the first secondary coil comprises from 1 to 30 coil turns, preferably from 1 to 10, more preferably from 1 to 5.
12. The planar transformer of any of the preceding examples, wherein the first primary coil and/or the first secondary coil has an inductance in the range from 10 µH to 10 mH, preferably from 50 µH to 1 mH, more preferably from 200 µH to 500 µH.
13. The planar transformer according to any of the preceding examples, wherein the transformer magnetic core is further configured for guiding the magnetic flux generated by the first primary coil and/or the first secondary coil around at least a second opening of the transformer magnetic core, wherein the first secondary coil and the first secondary coil are coiled around the transformer magnetic core through the first opening and through the second opening.
14. The planar transformer device of any of the preceding examples, further comprising a first inductor element comprising:
   a planar first induction coil electrically connected in series with the first primary coil, and
   a first induction magnetic core for guiding a magnetic flux generated by the first induction coil around at least a first opening of the first induction magnetic core,
   wherein the first inductor element is arranged over the transformer magnetic core.
15. The planar transformer device of example 14, further comprising a second inductor element comprising:
   a planar second induction coil electrically connected in series with the first secondary coil, and
   a second induction magnetic core for guiding a magnetic flux generated by the second induction coil around at least a first opening of the second induction magnetic core,
   wherein the second inductor element is arranged below the transformer magnetic core or over the first inductor element.
16. The planar transformer of example 17 or 18, wherein the first inductor element and the second inductor element are mutually separated by one or more intercore axial dielectric spacers and/or wherein the first inductor element and/or the second inductor element are separated from the transformer magnetic core by one or more intercore axial dielectric spacers.
17. The planar transformer of any of examples 17 to 19, wherein the first induction magnetic core and/or the second induction magnetic core comprises two superposed induction sub-cores separated in the axial direction by an intersub-core axial dielectric spacer.
18. The planar transformer of any of the preceding examples, wherein at least one of the first primary coil and the first secondary coil comprises or is of litz wire.
21. A battery charger for charging an electric battery comprising the planar transformer of any of the preceding examples.

## Claims

1. A planar transformer (10) comprising:
a planar first primary coil (12);
a planar first secondary coil (14) inductively coupled with the first primary coil (12); and
a transformer magnetic core (18) for guiding a magnetic flux generated by the first primary coil (12) and/or the first secondary coil (14) around at least a first opening (16) of the transformer magnetic core (18);
wherein the first primary coil (12) and the first secondary coil (14) are coiled around the transformer magnetic core (18) through the first opening (16); and
wherein the first primary coil (12) and the first secondary coil (14) are arranged on a first plane.

2. The planar transformer of claim 1, wherein the first primary coil (12) and the first secondary coil (14) are concentric.

3. The planar transformer of claim 1 or 2, wherein the first primary coil (12) is surrounded by the first secondary coil (14).

4. The planar transformer of any of the preceding claims, wherein the first primary coil (12) and the first secondary coil (14) are spaced apart in a radial direction, wherein a radial distance between the first primary coil (12) and the first secondary coil (14) preferably is from 0.1 mm to 15 mm, preferably from 1 mm to 10 mm, more preferably from 2 mm to 4 mm; and/or
wherein the planar transformer further comprises one or more intercoil radial dielectric spacers (20) extending in a radial direction between the first primary coil (12) and the first secondary coil (14).

5. The planar transformer of any of the preceding claims, wherein the first primary coil (12) and/or the first secondary coil (14) is separated from the transformer magnetic core (18) in an axial direction by one or more axial dielectric spacers (22a, 22b); and/or wherein the first primary coil (12) and/or the first secondary coil (14) is separated from the transformer magnetic core (18) in the axial direction by an axial dielectric spacer (22a, 22b) having a thickness in the axial direction from 0.1 mm to 3 mm, preferably from 0.2 mm to 1.5 mm, more preferably from 0.3 mm to 1.0 mm or 0.3 to 0.6 mm.

6. The planar transformer of any of the preceding claims, wherein the first primary coil (12) and/or the first secondary coil (14) is separated from the transformer magnetic core (18) in a radial direction by one or more radial dielectric spacers (24); and/or wherein the first primary coil (12) and/or the first secondary coil (14) is separated from the transformer magnetic core (18) in a radial direction by a radial dielectric spacer (24a, 24b, 24c) having a thickness in the radial direction from 0.5 mm to 2.5 mm, preferably from 1.0 mm to 2.0 mm, more preferably from 1.25 mm to 1.75 mm.

7. The planar transformer device of any of claims 4 to 6, wherein any of said dielectric spacers (20, 22, 24) comprises or is of a material having a dielectric constant smaller than 10, preferably smaller than 5, more preferably smaller than 2,5.

8. The planar transformer of any of the preceding claims, wherein the first primary coil (12) and/or the first secondary coil (14) comprises from 1 to 30 coil turns, preferably from 1 to 10, more preferably from 1 to 5; and/or
wherein the first primary coil (12) and/or the first secondary coil (14) has an inductance in the range from 10 µH to 10 mH, preferably from 50 µH to 1 mH, more preferably from 200 µH to 500 µH.

9. The planar transformer according to any of the preceding claims, wherein the transformer magnetic core (18) is further configured for guiding the magnetic flux generated by the first primary coil (12) and/or the first secondary coil (14) around at least a second opening (16b) of the transformer magnetic core (18), wherein the first secondary coil (14) and the first secondary coil (14) are coiled around the transformer magnetic core (18) through the first opening (16a) and through the second opening (16b).

10. The planar transformer according to any of the preceding claims, further comprising:
a planar second primary coil (32); and
a planar second secondary coil (34) inductively coupled with the second primary coil (12); and
wherein the second primary coil (32) and the second secondary coil (34) are coiled around the transformer magnetic core (18) through the first opening (16a); and
wherein the second primary coil (32) and the second secondary coil (34) are arranged on a second plane parallel to the first plane and spaced apart from the first plane in the axial direction, wherein at least one of the second primary coil (32) and the second secondary coil (34) preferably is separated from the first primary coil (12) and/or the first secondary coil (14) in the axial direction by one or more intercoil axial dielectric spacers (40).

11. The planar transformer device of any of the preceding claims, further comprising a first inductor element (50) comprising:
a planar first induction coil (52) electrically connected in series with the first primary coil (12), and
a first induction magnetic core (58) for guiding a magnetic flux generated by the first induction coil (52) around at least a first opening (56a) of the first induction magnetic core (58),
wherein the first inductor element (50) is arranged over the transformer magnetic core (18);
wherein the planar transformer preferably further comprises a second inductor element (60) comprising:
a planar second induction coil (62) electrically connected in series with the first secondary coil (14), and
a second induction magnetic core (68) for guiding a magnetic flux generated by the second induction coil (62) around at least a first opening (66a) of the second induction magnetic core (68),
wherein the second inductor element (60) is arranged below the transformer magnetic core (18) or over the first inductor element (50).

12. The planar transformer of claim 11, wherein the first inductor element (50) and the second inductor element (60) are mutually separated by one or more intercore axial spacers (70) and/or wherein the first inductor element (50) and/or the second inductor element (60) are separated from the transformer magnetic core (18) by one or more intercore axial spacers (70).

13. The planar transformer of any of claims 11 or 12, wherein the first induction magnetic core (58) and/or the second induction magnetic core (68) comprises two superposed induction sub-cores (58a, 58b; 68a, 68b) separated in the axial direction by an intersub-core axial spacer (72).

14. The planar transformer of any of the preceding claims, wherein at least one of the first primary coil (12) and the first secondary coil (14) comprises or is of litz wire.

15. A battery charger for charging an electric battery comprising the planar transformer (10) of any of the preceding claims.
